(19) Europäisches Patentamt
European Patent Office
Office européen des brevets

(11) Veröffentlichungsnummer: **0 572 851 A1**

(12) **EUROPÄISCHE PATENTANMELDUNG**

(21) Anmeldenummer: **93107983.4**

(22) Anmeldetag: **17.05.93**

(51) Int. Cl.[5]: **C08L 67/06**, C08L 63/10, C08L 75/14, C08F 299/04, //(C08L67/06,23:06)

(30) Priorität: **30.05.92 DE 4217955**

(43) Veröffentlichungstag der Anmeldung: **08.12.93 Patentblatt 93/49**

(84) Benannte Vertragsstaaten: **AT BE CH DE ES FR GB IT LI NL SE**

(71) Anmelder: **BASF Aktiengesellschaft**
**Carl-Bosch-Strasse 38**
**D-67063 Ludwigshafen(DE)**

(72) Erfinder: **Hesse, Anton, Dr.**
**Peter-Nickel-Strasse 15**
**W-6940 Weinheim(DE)**
Erfinder: **Hofmann, Juergen**
**Muenchbuschweg 30c**
**W-6700 Ludwigshafen(DE)**
Erfinder: **Heckmann, Walter, Dr.**
**Geiersbergstrasse 2**
**W-6940 Weinheim(DE)**
Erfinder: **Buhl, Dieter**
**Kaethe-Kollwitz-Strasse 4a**
**W-6710 Frankenthal(DE)**

(54) **Styrolfreie Polyesterharze.**

(57) Die Erfindung betrifft ein styrolfreies ungesättigtes Polyesterharz aus einem ungesättigten Polyester, Polyethylen und einem Comonomer mit einem Siedepunkt von mindestens 100 °C, welches auch bei 120 °C das Polyethylen nicht löst.

EP 0 572 851 A1

Die Erfindung betrifft styrolfreie ungesättigte Polyesterharze, die zu schwundarmen und zähen Formkörpern härtbar sind.

Handelsübliche ungesättigte Polyesterharze enthalten in der Regel als copolymerisierbares Monomeres Styrol in Mengen von 25 bis 45 Gew.-%. In der Bundesrepublik Deutschland wurde 1987 die maximale Arbeitsplatzkonzentration an Styrol von 100 ppm auf 20 ppm gesenkt. Auch in anderen Ländern sind ähnliche Tendenzen erkennbar. Bei vielen üblichen Verarbeitungsverfahren für Polyesterharze kann der MAK-Wert nicht oder nur mit hohem Aufwand eingehalten werden. Es besteht daher das dringende Bedürfnis, die Styrolemission von ungesättigten Polyesterharzen zu verringern, bzw. das Styrol durch ein anderes Monomeres zu ersetzen.

Es ist bekannt, daß ungesättigte Polyesterharze, denen thermoplastische Kunststoffe, wie z.B. Polyethylenpulver, zugesetzt wurden, zu Formkörpern mit verbesserter Zähigkeit und verringerter Schrumpfneigung ausgehärtet werden können. Die meisten bekannten, mit Polyethylen modifizierten Polyesterharze enthalten Styrol als Comonomeres. Dies trifft beispielsweise auf die Harze nach FR-A 1 148 285 und GB 1 250 631 zu.

Die DE-B 24 31 410 beschreibt schwundarm härtbare Harzmassen in Form einer lagerstabilen Dispersion eines pulverförmigen, carboxylgruppenhaltigen Ethylenmischpolymerisats in einer Lösung eines ungesättigten Polyesters in einem Comonomeren. Der Gehalt des Ethylenmischpolymerisats an Carboxylgruppen ist für die gewünschte Lagerstabilität offenbar zwingend. Neben Vinylaromaten sind u.a. auch (Meth-)Acrylate und Allylester als geeignete Comonomere genannt; Styrol ist aber das bevorzugte Comonomer.

In DE-B 24 08 898 ist ein Verfahren zur Herstellung fließfähiger, stabiler Dispersion von Ethylenpolymerisaten in styrolischen Lösungen von ungesättigten Polyestern beschrieben. Dabei wird bei erhöhter Temperatur ein Ethylenpolymerisat, z.B. Hochdruckpolyethylen, in Styrol gelöst, diese Lösung wird mit einer styrolischen Lösung des ungesättigten Polyesters bei 50 bis 120 °C in einer Zone hoher Turbulenz unter Einwirkung starker Scherkräfte vereinigt und die Mischung wird so lange gerührt, bis sich ein niederviskoser,fließfähiger Zustand ausgebildet hat. Ein ähnliches Verfahren beschreibt DE-C 25 51 144, nach welcher auf die Einwirkung starker Scherkräfte verzichtet werden kann, wenn man die vereinigten styrolischen Lösungen in Gegenwart eines urethangruppenhaltigen Thixotropiermittels verrührt. Es sind dann allerdings lange Verweilzeiten erforderlich, in den Beispielen wird jeweils 4 Stunden lang gerührt. Hier sind neben dem bevorzugten Styrol auch wieder andere Comonomere genannt die aber nur dann als Lösungsmittel für das Ethylenpolymerisat wirken wenn dieses ein Mischpolymerisat mit verhältnismäßig hohem Comonomergehalt ist.

Der Erfindung lag also die Aufgabe zugrunde, styrolfreie und damit physiologisch unbedenkliche ungesättgte Polyesterharze bereitzustellen, die zu schwundarmen und zähen Formkörpern ausgehärtet werden können.

Diese Aufgabe ist erfindungsgemäß gelöst bei einem styrolfreien, ungesättigten Polyesterharz, enthaltend

A. 95 bis 50 Gew.-% eines ungesättigten Polyesters, und

B. 5 bis 50 Gew.-% Ethylenhomopolymer, welches

C. 20 bis 120 Gew.-teile, bezogen auf 100 Gew.-teile A + B eines Comonomeren mit einem Siedepunkt von mindestens 100 °C bei Normaldruck) enthält, welches das Polyethylen B auch bei 120 °C nicht löst.

Zu den einzelnen Komponenten ist folgendes zu sagen:

A. Ungesättigte Polyester sind durch einen Gehalt an

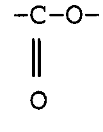

und -CH = CH- Gruppen gekennzeichnet.

1. Bevorzugt sind die ungesättigten Polyester (UP) im strengeren Sinne. Dies sind Kondensationsprodukte aus mehrwertigen, insbesondere zweiwertigen Carbonsäuren und deren veresterbaren Derivaten, insbesondere deren Anhydriden, die mit mehrwertigen, insbesondere zweiwertigen Alkoholen esterartig verknüpft sind, und gegebenenfalls zusätzliche Reste einwertiger Carbonsäuren oder einwertiger Alkohole enthalten, wobei zumindest ein Teil der Einsatzstoffe über ethylenisch ungesättigte, copolymerisationsfähige Gruppen verfügen muß.

Die Säurezahl des ungesättigten Polyesterharzes sollte unterhalb von 100, insbesondere zwischen 0 und 50 liegen. Besonders bevorzugt sind Polyesterharze aus Maleinsäure, gegebenenfalls zusammen mit o-Phthalsäure einerseits und Diolen, wie Dipropylenglykol, Diethylenglykol, Ethylenglykol, Neopentylglykol und/oder Propandiol-1,2 andererseits.

2. Geeignet sind auch Vinylesterharze (VE-Harze). Kennzeichnend für diese Klasse von Harzen ist die Gruppe

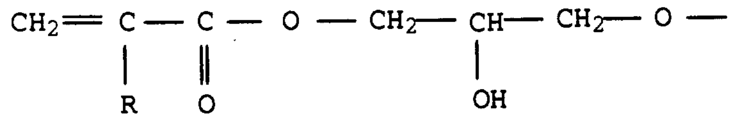

mit R = H oder $CH_3$.

Unter VE-Harzen die auch Epoxidacrylate genannt werden, versteht man gemeinhin Umsetzungsprodukte von Polyepoxiden mit ungesättigten Monocarbonsäuren, vorzugsweise mit Methacrylsäure. Diese Harze werden beispielsweise in GB-A 1 006 587 und in den US-PS 3 066 112 und 3 179 623 beschrieben, wobei bevorzugt VE-Harze auf Basis von Bisphenol A zur Anwendung kommen. Sie zeichnen sich durch hohe Zähigkeit und gute Chemikalienbeständigkeit bei begrenzter Wärmeformbeständigkeit aus. Vinylesterharze aus Epoxy-Novolakharzen und (Meth-)Acrylsäure, wie sie beispielsweise in der US-PS 3 256 226 beschrieben werden, weisen dagegen höhere Wärmeformbeständigkeiten, aber geringere Zähigkeiten auf.

3. Vinylesterurethanharze (VU-Harze) sind bekannt, z.B. aus US-A 3 297 845, US-A 3 772 404, US-A 4 618 658, GB-A 2 217 722 und DE-A 37 44 390. Sie weisen im allgemeinen folgende Gruppen auf:

a)

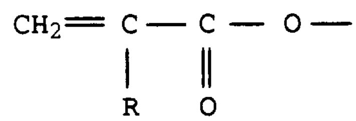

(mit R = H oder $CH_3$).

b)

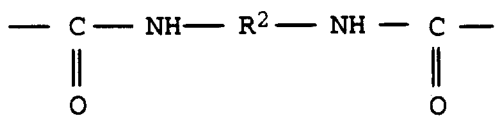

(mit $R^2$ = zweiwertiger aliphatischer, aromatischer oder cycloaliphatischer Rest mit 4 bis 40 C-Atomen, vorzugsweise ein aromatischer Rest mit 6 bis 20 C-Atomen), gegebenenfalls

c) $-O-R^3-O-$

(mit $R^3$ = zweiwertiger aliphatischer, cycloaliphatischer oder aromatischer Rest mit 2 bis 500 C-Atomen, vorzugsweise ein aliphatischer Rest mit 4 bis 100 C-Atomen), sowie gegebenenfalls

d) $-NH-R^4-NH-$

(mit $R^4$ = aliphatischer cycloaliphatischer oder aromatischer Rest mit 2 bis 100 C-Atomen).

Vorzugsweise ist das VU-Harz ein Umsetzungsprodukt aus

einem polyfunktionellen Isocyanat,

gegebenenfalls einem mehrwertigen Alkohol,

gegebenenfalls einem mehrwertigen Amin,

einem Hydroxyalkyl-(meth)acrylat,

wobei bei der Umsetzung das Gewichtsverhältnis Isocyanat:(Alkohol + Amin) zwischen 100:0 und 100:300 beträgt und das Äquivalentverhältnis Hydroxyalkyl(meth)acrylat zu den freien Isocyanatgruppen des Umsetzungsproduktes zwischen 3:1 und 1:2 liegt.

B. Bevorzugtes Ethylenhomopolymerisat ist Hochdruckpolyethylen, daneben sind auch nach dem Niederdruck- und Mitteldruckverfahren hergestellte Polyethylentypen gut geeignet.

Die nach DIN 53 735 bei 190 °C und 2.16 kp Belastung gemessenen Schmelzindexwerte des Ethylenpolymerisats liegen vorzugsweise im Bereich von nicht fließfähig bis zu 1000 [g/10 min];

bevorzugt werden Polyethylentypen mit Schmelzindexwerten zwischen 1 und 40 verwendet.

Die nach ISO 3146 gemessene DSC-Schmelzpunkte liegen vorzugsweise unterhalb von 136°, insbesondere zwischen 90 und 135°C.

Es können auch Abmischungen von Ethylenpolymerisaten mit untergeordneten Mengen anderer Thermoplaste eingesetzt werden, z.B. von Polypropylen, insbesondere von einem niedermolekularen, thermisch abgebauten Polypropylen, oder von einem mit Maleinsäureanhydrid gepfropften Polypropylen. Die Abmischung der verschiedenen Polymerisate erfolgt entweder vor oder während der Dispergierung in der Schmelze des ungesättigten Polyesters.

Polyethylen fällt bei der Herstellung im technischen Maßstab als Granulat oder Grieß mit einem Durchmesser von mehr als 1 mm an. Es ist bei Raumtemperatur nicht mahlbar. Bei der recht aufwendigen Tieftemperaturmahlung erhält man Partikel mit einem Durchmesser von 150 bis 300 $\mu$m, die eine unregelmäßige Form und rauhe, poröse Oberfläche aufweisen. Setzt man solche gemahlene Polyethylenpartikel ungesättigten Polyesterharzen zu und härtet diese, dann weisen die erhaltenen Formteile eine unruhige Oberfläche auf. Das ist zwar in machen Fällen tolerierbar, bevorzugt sind jedoch runde Polyethylen-Partikeln mit glatter Oberfläche und einem mittleren Durchmesser von 2 bis 200 $\mu$m die man erhält, wenn man wie weiter unten beschrieben - eine Schmelze des Polyethylens in einer Schmelze des ungesättigten Polyesters gleichmäßig verteilt.

Die Mischung A + B enthält 5 bis 50, vorzugsweise 20 bis 45 Gew.-% des Polyethylen B.

C. Das erfindungsgemäße ungesättigte Polyesterharz enthält als Comonomer 20 bis 120, vorzugsweise 30 bis 100 Gew.teile, bezogen auf 100 Gew.-teile A + B, einer ethylenisch ungesättigten, copolymerisierbaren Verbindung C mit einem Siedepunkt von mindestens 100°C (bei Normaldruck), vorzugsweise von mindestens 120°C, welche das Polyethylen B auch bei 120°C nicht zu lösen vermag.

Bevorzugte Comonomere sind Methacrylsäureester, wie z.B. n-Butylmethacrylat, 2-Ethylhexylmethacrylat, Laurylmethacrylat, Cyclohexylmethacrylat, 2-Hydroxyethylmethacrylat, 2-Hydroxypropylmethacrylat, 2-Acetacetoxyethylmethacrylat, Butandioldimethacrylat und Neopentylglykoldimethacrylat; ferner Acrylsäureester, Meth)-acrylsäureamide, Vinylether und Vinylester, wie Vinylbenzoat und Cyclohexancarbonsäurevinylester; schließlich auch Allylester, wie Diallylphtalat, Diallylisophthalat, Diallylfumarat und Triallylcyanurat.

Die Mischung aus dem ungesättigten Polyester A und dem Polyethylen B wird vorzugsweise dadurch hergestellt, daß man eine Schmelze des Polyethylens in einer Schmelze des ungesättigten Polyesters gleichmäßig verteilt und auf diese Weise eine Dispersion des Polyethylens als disperse Phase in dem ungesättigten Polyester als kohärente Phase herstellt. Dies kann mit jedem geeigneten Mischaggregat durchgeführt werden, vorzugsweise in einem Extruder oder einem Rührkessel mit innen- oder außenliegenden Mischvorrichtungen.

a) Extruderverfahren

In einem Extruder, der z.B. die Form eines Doppelschneckenextruders haben kann, wird das Polyethylen vorzugsweise bei 120 bis 240°C, insbesondere bei 160 bis 200°C aufgeschmolzen. Über einen Seitenextruder oder durch eine Pumpe wird eine vorzugsweise 100 bis 150°C heiße Schmelze des ungesättigten Polyesters zugeführt. Die Verweilzeit der Schmelze im Extruder beträgt vorzugsweise 20 bis 300 s. Das Vermischen der Schmelzen geschieht in einem Scherfeld, dessen Dissipationsenergie vorzugsweise zwischen 0,05 und 0,4 [$kWh \cdot kg^{-1}$] liegt. Die Dissipationsenergie ist der spezifische Energieeintrag in das Scherorgan. Sie kann z.B. bei einem Doppelschneckenextruder berechnet werden aus dem Drehmoment und der Leistungsaufnahme des Elektromotors, der die Energie auf die beiden Wellen des Extruders überträgt. Durch diese Scherung wird das Polyethylen auf eine Teilchengröße von weniger als 200 $\mu$m, insbesondere von 10 bis 100 $\mu$m zerteilt. Da die Zerteilung in der Schmelze erfolgt, entstehen runde, annähernd kugelförmige Partikel mit glatter Oberfläche. Das Abkühlen auf Temperaturen unterhalb des Kristallitschmelzpunktes des Ethylenpolymeren, vorzugsweise unterhalb von 120°C, erfolgt noch im Extruder, so daß aus diesem eine Dispersion von festen Polyethylen-Partikeln im flüssigem ungesättigtem Polyester ausgepreßt wird. Diese Dispersion wird dann direkt mit dem Monomeren C vermischt oder sie wird weiter abgekühlt, indem man sie z.B. in Wasser extrudiert oder schmelzegranuliert. Das trockene, blockfeste Granulat kann gelagert und transportiert und bei Bedarf mit den Monomeren C unter Rühren vermischt werden, wobei es den Polyester aus der Mischung A + B herauslöst.

Man kann aber auch nach der Schmelzedisprgierung das Monomere C direkt in den Extruder einspeisen und die Mischung A + B + C dort herstellen.

b) Rührkesselverfahren

Das erfindungsgemäße Vermischen der Polyesterschmelze mit der Polyethylenschmelze kann auch in üblichen Rührkesseln, die mit einem kräftigen Rührer ausgerüstet sind, erfolgen. Dabei wird vorzugsweise diskontinuierlich gearbeitet. Dieses Verfahren ist mit Vorteil auszuführen, wenn der Kristallitschmelzpunkt des Polyethylens unterhalb von 125 °C liegt, also z.B. mit Niederdruckpolyethylen, und wenn Dispergiermittel zugesetzt werden.

Man kann in den Rührkessel mit der Schmelze des ungesättigten Polyesters das Polyethylen entweder als Schmelze oder - bevorzugt - als Granulat oder Grieß eingeben. Die Massetemperatur im Rührkessel beträgt 140 bis 220 °C, vorzugsweise 150 bis 200 °C, die Verweilzeit 10 bis 60 min, vorzugsweise 20 bis 40 min. Nach beendeter Dispergierung wird die Schmelze aus dem Kessel ausgetragen. Sie kann granuliert werden; vorzugsweise wird sie aber anschließend mit dem Monomeren C vermischt. Dies kann entweder dadurch geschehen, daß in den Rührkessel die erforderliche Menge Monomer zugegeben und mit der Schmelze verrührt wird, oder daß die Schmelze in einen nachgeschalteten Rührkessel eingetragen wird, in dem sich Monomeres befindet, das bevorzugt auf 40 bis 90 °C erwärmt ist.

Sowohl beim Extruder- als auch beim Rührkesselverfahren entsteht nach Zusatz des Monomeren und Abkühlen eine Dispersion des Polyethylens B in Form runder Partikel mit einem Durchmesser von 2 bis 200 µm in dem Polyesterharz A + C. Um die Dispersion auch über längere Zeit hinweg stabil zu halten und ein Agglomerieren der Polyethylen-Partikel zu vermeiden, setzt man vorteilhaft ein übliches oberflächenaktives Dispergierhilfsmittel D zu, vorzugsweise in Mengen von 0,1 bis 15, insbesondere 0,5 bis 5 Gew.-Teile, bezogen auf 100 Gew.-Teile A + B.

Geeignete Dispergatoren D sind im Monomeren oder im ungesättigten Polyester oder in einem Polyester/Monomer-Gemisch lösliche Polymere. Bevorzugt sind Ethylen-Vinylacetatcopolymerisate bzw. Polyvinylacetate, bevorzugt solche mit 60 bis 100 Gew.-% Vinylacetatgehalt, und einer Mooney-Viskosität von mindestens 15, vorzugsweise von 40 bis 65 Mooney, gemessen nach DIN 53 523 (L-4).

Weiterhin sind auch Poly-(meth)acrylsäureesterhomo- und-copolymerisate, wie z.B. Polyacrylsäuredecylester, oder Copolymerisate des Ethylens mit (Meth)acrylsäureestern geeignet, sowie Pfropfpolymerisate mit den genannten Polymeren als Pfropfsubstrat. Ferner sind Polyether, wie Polyethylenoxid, Polypropylenoxid und Blockcopolymerisate dieser beiden Verbindungen, ethoxylierte gesättigte und ungesättigte Fettsäuren und deren Derivate geeignet, sowie Cellulosederivate wie Methylcellulose, Ethylenhydroxycellulose oder Celluloseester, z.B. Celluloseacetat, Celluloseacetopropionat, Celluloseacetobutyrat oder Nitrocellulose.

Der flüssigen Dispersion von Polyethylenpartikeln im Polyesterharz werden nun - zweckmäßigerweise in zwei Stufen - weitere Zusatzstoffe zugemischt. Zunächst werden Inhibitoren, Beschleuniger, Viskositätserniedriger und Waschse, zweckmäßigerweise jeweils gelöst oder dispergiert im Monomeren C, zugegeben. Die erhaltene Dispersion ist gut fließfähig und lagerfähig. In Ausnahmefällen, nämlich bei hohem Gehalt an Polyethylen, liegt sie als Paste vor, die zur Weiterverarbeitung leicht erwärmt werden muß. Kurz vor der Weiterverarbeitung wird dann der Radikalinitiator zugefügt, gegebenenfalls zusammen mit Füllstoffen, Fasern, Trennmitteln, Gleitmitteln und Eindickmitteln. Will man SMC-Massen herstellen, dann wird die Masse mit Verstärkungsfasern zusammen zu einem flächigen Halbzeug geformt und eingedickt.

Die wärmehärtbare Formmasse liegt als flächiges Halbzeug (SMC), als teigförmige Masse (BMC), als rieselfähige Spritzgußmasse oder als Paste vor. Die Weiterverarbeitung kann dementsprechend nach verschiedenen Methoden vorgenommen werden: SMC-Massen werden in Pressen, BMC-Massen und rieselfähige Massen durch Spritzgießen oder Spritzprägen und Pasten durch Pultrusion verformt. Während oder nach dem Verformen erfolgt die Härtung des Polyesterharzes, vorzugsweise bei Temperaturen oberhalb von 50 °C, insbesondere zwischen 120 und 170 °C. Nach der Härtung bleibt das Polyethylen als disperse Phase im gehärteten Polyesterharz als kohärenter Phase. Das Polyethylen bewirkt im Formteil eine drastische Erhöhung der Zähigkeit, wobei aber der Duromercharakter der Formteile, d.h., hohe Wärmeformbeständigkeit und gute Oberflächeneigenschaften, erhalten bleiben.

Anwendungsgebiete der erfindungsgemäßen Formmassen

Anwendungsgebiete der erfindungsgemäßen Formmassen sind die Herstellung von Automobilteilen, z.B. im Karosseriebereich, Motorhauben, Heckklappen, Stoßfängerträger, Frontends und im Motorbereich Schallabschirmungen, Ansaugkrümmer und Abdeckungen, ferner Ersatzradmulden, Rückenlehnen für Sitze und Reflektoren für Scheinwerfer. Daneben spielen auch Anwendungen im Elektrosektor eine Rolle, z.B. die Herstellung von Verteilerkästen, Langfeldleuchten und Gehäusen für Elektroanlagen.

Die in den Beispielen genannten Prozente und Teile beziehen sich auf das Gewicht.

Beispiele

A) Ungesättigtes Polyesterharz

A1) In einem zweistufigen Kondensationsverfahren wurde der monomerenfreie ungesättigte Polyester unter Rühren und durch Überleiten von Stickstoff hergestellt. In der ersten Stufe reagierten Isophthalsäure, Neopentylglykol und Propylenglykol im Molverhältnis 1 : 1, 2 : 0,23 bei Temperaturen bis 200 °C bis zur Säurezahl 10 und einer Schmelzviskosität bei 125 °C von 1000 [mPa•s] (Platte/Konus-Viskosimeter, Firma Epprecht Instrumente + Controls AG). Nach Zusatz von Maleinsäure und weiterem Neopentylglykol im Molverhältnis 1 : 0,6, bezogen auf 1 Mol eingesetzte Isophtalsäure, wurde schließlich bis Säurezahl 19 und Schmelzviskosität (175 °C) 4300 [mPa•s] verestert, auf 150 °C abgekühlt, 180 ppm Hydrochinon zugefügt und in Kühlwannen ausgegossen. Beim Abkühlen auf 23 °C erstarrte das Produkt glasartig und ließ sich brechen. Das Granulat war blockfest beim Lagern und hatte einen Erweichungspunkt von 80 °C (nach Krämer-Sarnow-Nagel).

A2) 420 Teile UP-Harz A1 wurden unter Rühren bei 23 °C in eine Monomermischung aus 140 Teilen Diallylphthalat und 140 Teilen Trimethylolpropantrimethacrylat eingetragen, mit 200 ppm Hydrochinon inhibiert und bei 80 °C anschließend zwei Stunden gehalten. Es entstand eine viskose Lösung mit einer Viskosität (23 °C) von 938 [Pa•s].

B) Ethylenpolymerisate

B1: Ethylenhomopolymerisat mit Schmelzindex MFI
(190/2,16): 18 [g/10 min] (DIN 53 735),
Schmelzpunkt (DSC): 132 [°C] (ISO 3146)
und der Dichte 0,954 [g/cm$^3$] (DIN 53 479-A).

B2: Ethylenhomopolymerisat mit Schmelzindex MFI
(190/2,16): 20 [g/10 min]
Schmelzpunkt (DSC): 106 [°C]
und der Dichte 0,916 [g/cm$^3$]

Patentbeispiel 1

Beschrieben werden die Schmelzdispergierung von Polyethylen in einem ungesättigten Polyester, die Herstellung einer bei Raumtemperatur fließfähigen Dispersion und deren Verarbeitung zu SMC:

a) Schmelzdispergierung

Zur Herstellung von Granulaten mit disperser Polyethylenphase wurde Polyethylen B1 in einem Doppelwellenextruder (Typ ZSK 30, Werner & Pfleiderer) bei 150 °C aufgeschmolzen und aus einem Seitenextruder mit der 130 °C heißen Schmelze des ungesättigten Polyesters A beschickt. Die Schneckendrehzahl betrug 150 U/min, die Temperatur in der Mischzone 145 °C und an der Strangaustrittdüse 144 °C. Der Strang wurde durch Wasser gezogen und granuliert. Er enthielt 40 % Polyethylen und 60 % ungesättigten Polyester. Das Granulat ließ sich bei 23 °C wochenlang ohne Blockbildung lagern.

b) Herstellung einer Dispersion

In einer Rührapparatur wurde eine Monomermischung C aus 75 Teilen Diallylphthalat und 65 Teilen 2-Hydroryethylmethacrylat bei 23 °C portionsweise unter Rühren mit 180 Teilen des obigen Granulats A + B vermischt, 100 ppm Hydrochinon sowie 500 ppm 2,6-Dimethylchinon zugesetzt und auf 80 °C erwärmt. Nach drei Stunden war eine fließfähige Dispersion mit Säurezahl 7,3 und einer Viskosität (23 °C) von 8.500 [mPa•s] entstanden. Zur Charakterisierung der Polyethylenphase wurde die Dispersion lichtmikroskopisch untersucht. Die mittlere Teilchengröße liegt bei ca. 50 µm. Die Teilchen haben eine annähernd runde Form und glatte Oberfläche.

c) SMC-Herstellung und Prüfung

Mit Hilfe eines schnell laufenden Rührwerks wurde folgende Harz/Füllstoffmischung präpariert:

100 Teile Dispersion 1b)
1,5 Teile tert.-Butylperbenzoat
50 Teile Füllstoff Kreide Milicarb®
3,5 Teile MgO-Paste Luvatol® MK 35
4,5 Teile Zn-Stearat

Die SMC-Herstellung erfolgte auf einer Technikumsanlage, bei der die Harz/Füllstoff-Mischung auf einer Polyethylenfolie mit geschnittenen Glasfaserrovings (2,5 cm lang) vereinigt, aufgerollt und 3 Tage bei 23 °C gelagert wurde. Danach ließen sich die Abdeckfolien abziehen, und das klebfreie SMC wurde in einem polierten Stahlwerkzeug 5 min lang unter 50 bar bei 145 °C zu 4 mm dicken Platten mit einem Glasfasergehalt von 33,8 % verpreßt. Tabelle 1 zeigt die Eigenschaften eines Formstoffes aus SMC 1c.

Der Kugelfalltest wird folgendermaßen ausgeführt. Für diesen Test werden aus 4 mm dicken Formstoffplatten Prüfkörper (80 x 80 mm) ausgearbeitet, zwischen Metallringen (Durchmesser 60 mm) eingespannt und darauf aus 70 cm Höhe eine Stahlkugel (761 g, Durchmesser: 57,1 mm) fallen gelassen. Die Zugseite des geschädigten Prüfkörpers wird mit roter Farbstofflösung (Diffusionsrot, Firma H. Klumpf) eingesprüht, nach 5 min mit Wasser abgewaschen, getrocknet und der Durchmesser der roten Schädigungszone ermittelt. Durch die Mitte der Schädigungszone wird aufgeschnitten und an der Schnittfläche die Dicke der roten Zone gemessen (Lupe mit Skala). Je geringer die Zahlenwerte beider Meßgrößen sind, desto unempfindlicher verhalten sich die Formstoffe bei Stoß- oder Schlagbeanspruchung.

Tabelle 1

| | Formstoff aus SMC 1c |
|---|---|
| E-Modul (nach EN 63) [$N/mm^2$] | 9500 |
| Schlagzähigkeit (23°C) (nach DIN 53 453) [$kJ/m^2$] | 94 |
| Kugelfalltest<br>Schädigungstiefe [mm]<br>Schädigungszone [mm] (Durchmesser) | <br>0,7<br>20 |

Patentbeispiel 2

a) Schmelzedispergierung

Ethylenhomopolymerisat B2 wurde in einem Doppelwellenextruder (ZSK 30) bei 150 °C aufgeschmlzen und aus einem Seitenextruder mit der Schmelze (130 °C, 100 U/min) des ungesättigten Polyesters A1 gemischt. Die Wellen vom Hauptextruder wurden mit 200 U/min gedreht, die Temperatur in der Mischzone betrug 140 °C und an der Austrittsdüse 152 °C. Die Schmelze wurde auf Blechuntelagen abgekühlt, nach dem glasartigen Erstarren gebrochen und gemahlen. Das Pulver blieb wochenlang ohne blockbildung lagerfähig.

b) Herstellung einer Dispersion

In einer Rührapparatur wurden 420 Teile des Pulvers von Beispiel 2a potionsweise bei 23 °C mit einer Monomermischung aus 140 Teilen Diallylphthalat und 140 Teilen Trimethylolpropantrimethacrylat verrührt 200 ppm Hydrochinon zugesetzt und drei Stunden bei 80 °C gehalten. Es resultierte eine fließfähige Dispersion einer Viskosität (23 °C) von 173 [Pa•s]. Lichtmikroskopische Aufnahmen (100:1, Dunkelfeld/Durchlicht) von der Dispersion ergaben eine mittlere Teilchengröße der dispersen Polyethylenphase von etwa 50 $\mu$m. Die Partikel hatten eine annähernd rude Form und glatte Oberflächen.

c) SMC-Herstellung und Prüfung

Mit Hilfe eines schnell laufenden Rührwerks wurden die Polyethylendispersion 2b (Beispiel 2) und das Harz A2 (Vergleichsbeispiel) jeweils mit Hydroxyethylmethacrylat verdünnt und folgende Harz/Füllstoffmischungen hergestellt:

| | Beispiel 2 | Vergleichsbeispiel |
|---|---|---|
| UP-Harz A2 | - | 85 Teile |
| Dispersion 2b | 90 Teile | - |
| Hydroxyethylmethacrylat | 10 Teile | 15 Teile |
| tert.-Butylperbenzat | 1,5 Teile | 1,5 Teile |
| Kreide (Millicarb®) | 50 Teile | 50 Teile |
| Zn-Stearat | 4,5 Teile | 4,5 Teile |
| Luvatol MK 35 (MgO-Paste) | 4,0 Teile | 4,0 Teile |
| Kugelfalltest Schädigungszone [mm] | 10 | 20 |
| Eindringtiefe [mm] | 1,5 | 3,0 |

Die SMC-Herstellung erfolgt im Labormaßstab. Dabei wurden obige Mischungen (vgl. Tabelle) auf einer Polyethylenfolie gleichmäßig verteilt, 30 % Glasfaserrovings (2,6 cm Schnittlänge) eingestreut und nach Abdeckung mit einer weiteren Folie durch Walzen gut imprägniert. Nach eintätiger Lagerung bei 23 °C und anschließend 2 Stunden bei 60 °C resultierten gereifte Halbzeuge, die nach dem Abziehen der Abdeckfolien 10 Minuten bei 145 °C und 200 bar in einem Stahlwerkzeug (4 X160X160 mm) zu Platten verpreßt wurden.

Die Stoßanfälligkeit der Formstoffe wurde anhand des Kugelfalltests analog zu Beispiel 1 beurteilt. Das vorteilhafte Verhalten des erfindungsgemäßen Formstoffs geht aus obiger Tabelle hervor.

**Patentansprüche**

**1.** Styrolfreies ungesättigtes Polyesterharz, enthaltend
A. 95 bis 50 Gew.-% eines ungesättigten Polyesters,
B. 5 bis 50 Gew.-% Ethylenhomopolymer,
dadurch gekennzeichnet, daß es
C. 20 bis 120 Gew.-teile, bezogen auf 100 Gew.-teile A + B eines Comonomeren mit einem Siedepunkt von mindestens 100 °C (bei Normaldruck) enthält, welches das Polyethylen B auch bei 120 °C nicht löst.

**2.** Polyesterharz nach Anspruch 1, dadurch gekennzeichnet, daß es als Comonomer einen Vinylester, einen Methacrylester oder einen Allylester mit einem Siedepunkt von mindestens 120 °C (bei Normaldruck) enthält.

**3.** Polyesterharz nach Anspruch 1, dadurch gekennzeichnet, daß das Ethylenhomopolymer im Harz in Form runder Partikel mit einem mittleren Durchmesser von 2 bis 200 µm dispergiert ist.

Europäisches Patentamt

# EUROPÄISCHER RECHERCHENBERICHT

Nummer der Anmeldung

EP 93 10 7983

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | DE-A-2 952 440 (MITSUBISHI GAS CHEMICAL CO)<br>* Seite 11, Zeile 26 - Seite 12, Zeile 10; Anspruch 1; Beispiele 11,12 *<br>--- | 1-2 | C08L67/06<br>C08L63/10<br>C08L75/14<br>C08F299/04<br>//(C08L67/06, 23:06) |
| Y | EP-A-0 134 513 (HERBERTS GESELLSCHAFT MIT BESCHRÄNKTER HAFTUNG)<br>* Seite 2, Zeile 1 - Zeile 25; Ansprüche 1-5 *<br>--- | 1-2 | |
| A | EP-A-0 234 692 (ICI)<br>* Seite 1, Zeile 1 - Zeile 20; Ansprüche 1-4 *<br>--- | 1-2 | |
| D,A | FR-A-1 148 285 (RÜTGERSWERKE-AG)<br>* Beispiel *<br>--- | 1,3 | |
| A | US-A-3 256 362 (CRAUBNER ET AL)<br>----- | | |

| RECHERCHIERTE SACHGEBIETE (Int. Cl.5 ) |
|---|
| C08L<br>C08F |

Der vorliegende Recherchenbericht wurde für alle Patentansprüche erstellt

| Recherchenort | Abschlußdatum der Recherche | Prüfer |
|---|---|---|
| DEN HAAG | 24 AUGUST 1993 | DECOCKER L. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)